# EUROPEAN PATENT APPLICATION

(11) **EP 4 339 167 A1**
(43) Date of publication of application: **20.03.2024**
(21) Application number: 21952668.8
(22) Date of filing: 05.08.2021
(51) Int. Cl.: C02F 1/48

(54) **MICROWAVED-INDUCED WASTEWATER RECYCLING SYSTEM**

(71) Applicant: Gestion Y Tratamientos Medioambientales Sl, 30892 Librilla (ES)
(72) Inventor: SABATER MARTINEZ, Francisco José, 30892 Librilla (ES); APARICIO CARRION, Juan, 30892 Libirlla (ES); ALBUIN ARICETA, Alberto, 30892 Librilla (ES); CRESPO CAMINO, Ignacio, 30892 Libirlla (ES); HERNANDEZ PEREZ, Julio, 30892 Librilla (ES); COLL ALMELA, Luis, 30892 Librilla (ES)
(74) Representative: ABG Intellectual Property Law, S.L.
(86) International application number: PCT/ES2021/070598
(87) International publication number: WO 2023/012384

(57) **Abstract**

The present invention is a cleaning and recycling system, or plant, designed to recycle wastewater, preferably of industrial origin, via an energy-saving process. In this process, the wastewater is first preheated using solar energy and then exposed to radio frequency energy emitted by magnetrons located in closed tanks that are coated on the inside with dielectric ceramic material, which is microwave transparent. The process takes advantage of the diverse materials that make up the wastewater, so that when the water reaches its boiling point, a sludge, or waste compound, with less volume than the initial volume of wastewater, settles to the bottom. The vapour produced through evaporation is then distilled, resulting in water that is suitable for other uses.

## Description

### TECHNICAL FIELD

The present invention pertains to the field of environmental engineering. More specifically, it relates to techniques for recycling wastewater and sludge, preferably of industrial origin, and the recovery of these by-products for subsequent use (A61 L, A62D, B09B, B09C).

### BACKGROUND ART

The diverse processes and systems currently in use for treating industrial wastewater all involve separating the elements and substances in the wastewater by various means. Some do so by varying the pH, redox potential and/or oxygen concentrations, while others use decantation and sedimentation with combined filters. All of these systems require subsequent treatment to eliminate traces of compounds that do not settle well, and at times, it is virtually impossible to fully regenerate the wastewater flow. Other current water purification systems use osmosis and reverse osmosis. These systems are suitable in concrete cases, but they are not widely used in the industry due to their specificity. Other existing purification procedures treat wastewater via distillation and have essentially been developed to desalinate sea water, in order to make it potable and suitable for irrigation. Purification via distillation involves heating an effluent, usually water, in a closed system. The effluent contains chemical compounds in solution whose vapour pressure is higher than that of water, so that as the water evaporates, it is separated from the chemical compounds it contains. Via subsequent condensation, the separated water returns to its liquid state containing almost no trace of compounds. In many cases, other compounds are subsequently added to the treated water to make it potable. This procedure requires a great deal of energy to raise the temperature of the liquid to its evaporation point, and various methods are used to obtain the necessary pressures and vapour flow rates in the closed tanks. Moreover, the liquid effluents used in this system cannot contain compounds that are less dense than water. The present invention addresses these limitations and also has other advantages, including energy savings.

In terms of the state of the prior art, there are some registered devices with significant functional and applicative differences. Patent ES2166261, for example, is intended as a treatment system for effluents from electrolysis plants. The characteristics of these effluents make them suitable for treatment in industrial wastewater treatment plants via evaporation, applicable for regulating pH and eliminating gaseous pollutants.

### SUMMARY OF THE INVENTION

The present invention is a system, or plant, designed to recycle wastewater, preferably of industrial origin. In this system, the wastewater is preheated using solar energy and sometimes heat exchangers. It is then exposed to electromagnetic fields in the microwave spectrum band (in the frequency range of 300MHz to 30GHz), which corresponds to a wavelength of between 10 mm and 1 m in the bands allocated to ISM applications (433.92MHz , 915MHz, 2.45GHz and 5.8GHz). Today's commercially available magnetrons operate at 915 MHz (up to 100 kW with efficiencies greater than 80%); at 2450 MHz (up to 15 kW with efficiencies greater than 70 %); and at 5800 MHz (up to 800 W).

The radio frequency energy is emitted by magnetrons located in closed tanks and coated on the inside with dielectric (microwave-transparent) ceramic material, preferably polytetrafluoroethylene (PTFE) or another polymer with similar wave transparency. The use of microwaves takes advantage of the different dielectric capacities of the composite elements dissolved in the wastewater so that, when the temperature exceeds 90°C, a sludge or residual compound with less volume than that the initial wastewater supplied remains in the lower part of the tank. In the upper part of the tank, the water vapour from the evaporation process is collected and passes through a conduit to a heat exchanger condenser, which transforms the vapour obtained via boiling into distilled water for other uses. This process takes advantage of the dielectric properties of the materials dissolved in the water. This is possible because, in general, all materials share the following two characteristics: relative dielectric permittivity and resistivity. The relative dielectric permittivity value is used to differentiate the compounds dissolved in the industrial wastewater, such as hydrocarbons, resins, and paints. The relative dielectric permittivity of the water will be between 70 and 90 (dimensionless), while that of the hydrocarbons will vary depending on whether they are apolar, polar aprotic, or polar protic. This difference in properties makes the waves transparent to certain solutes in the wastewater, like hydrocarbons, which therefore condense and separate from the liquid. When the dielectric property of the material dissolved in the water is much lower than that of the water itself, the system can separate it from the water, which thus ends up distilled.

### BRIEF DESCRIPTION OF THE DRAWINGS

The attached set of drawings complements the description of the invention and makes it easier to understand the invention's characteristics. The figures, which are intended to be illustrative and not exhaustive, show the following:
Figure 1.- A complete perspective view of the system, or plant, in which all of the elements of the invention can be seen.
Figure 2.- A complete perspective view of the system, or plant, in which all of the elements involved in the invention can be seen from behind the solar panels used to preheat the water.
Figure 3.- A cutaway side view of one of the tanks in which the wastewater is exposed to microwave radiation generated by magnetrons.
Figure 4.- The antenna that emits electromagnetic waves to excite the water molecules.
This is a detail of the upper part of the deposit shown in Figure 3 in which the wastewater is exposed to microwave radiation generated by magnetrons.

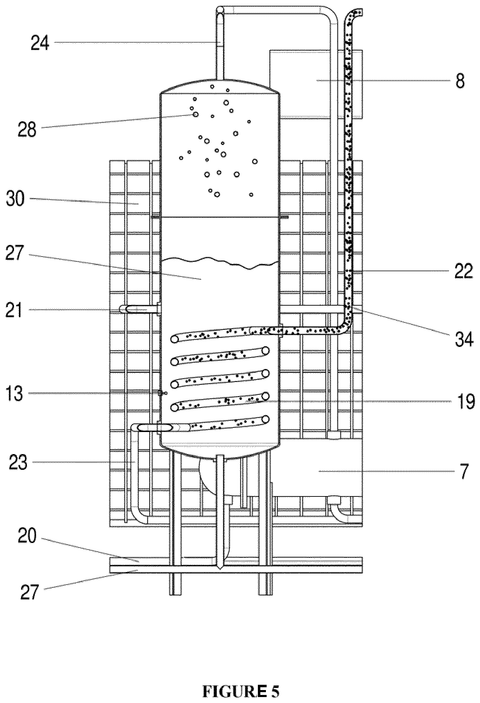

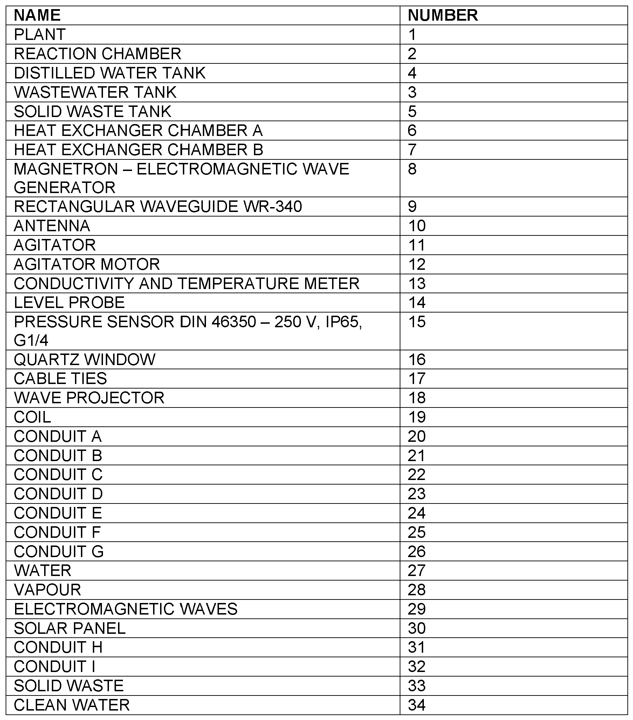

Figure 5.- A cutaway side view of the tubular thermal condensation system, consisting of one of the tanks into which both water vapour from the evaporation system and cold water from the dirty water tanks enter. Heat transfer between the vapour and cold water cools the former and heats up the latter.

A table at the end of the figures links the numbers used in the drawings with the elements they represent.

### PREFERRED EMBODIMENTS OF THE INVENTION

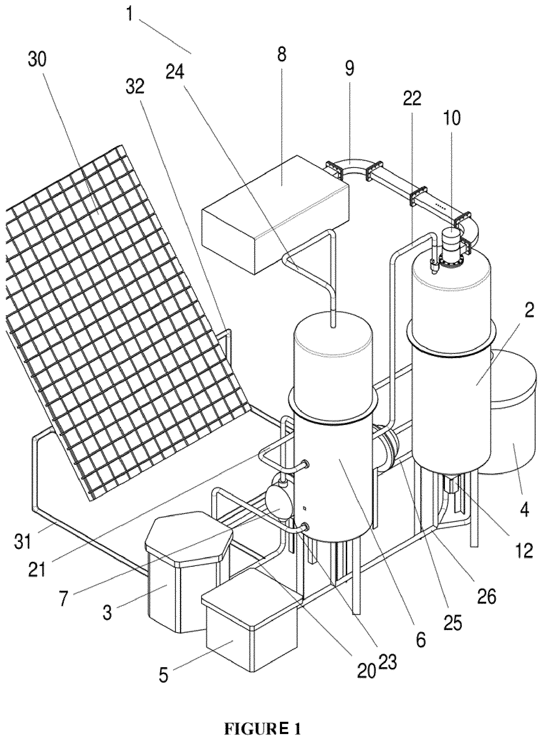

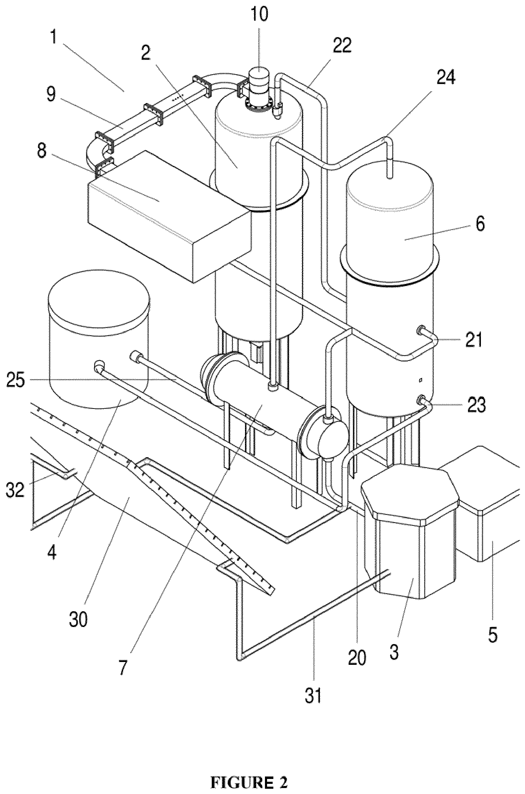

As can be seen in Figures 1 and 2, the process in the system starts with the preheating of the wastewater from the tank (n° 3) using solar energy provided by solar panels (n° 30). The solar panels serve a dual purpose, as they provide the energy both for the initial increase in the wastewater temperature and the electrical energy needed for the system to function. In addition to the energy provided by the solar panels, heat transfer from the condensation of the water vapour obtained (n° 6 y n° 7) in the process can also contribute to this initial heating, or preheating, stage.

There can be several wastewater collection tanks (n° 3) according to the different types of wastewater that need to be treated. Given that the temperature and times required would also vary depending on the type of wastewater, this would make it possible to optimize the distillation process and reduce costs. The type of solute for each type of water, as well as its percentage, affects the energy required given the different boiling points, which can range from 90°C to 100°C. In all cases, the tanks will be coated on the inside with polytetrafluoroethylene (PTFE) to avoid corrosion. The wastewater collection tanks (n° 3) have two channels through which the wastewater flows. In the first, the water flows through conduit H (n° 31), where it gets heated by the energy generated by the solar panels (n° 30) to an average temperature of between 40°C and 60°C. This temperature is monitored by a thermocouple in order to increase or decrease the flow of water being treated as needed. The water then continues its cycle through conduit I (n° 32) until it reaches the reaction chamber (n°2), where its temperature is raised to the evaporation point by exposure to electromagnetic waves (n° 29). In the other wastewater heating channel, the water flows through conduit A (n° 20) towards the tank that acts as a heat exchanger (n° 6); this pathway is designed to function when the system's demand for wastewater is higher than the flow provided by the solar panels, thus avoiding a system shutdown. The amount water the system, or plant, needs depends on the level of treated water in the reaction chamber (n° 2), which decreases as the evaporation process occurs; to monitor this level, the reaction chamber has a level sensor (n° 14). The preheated water from the two preheating cycles described above either enters the condensation chamber (n°6) via conduit B (n° 21), where it finishes preheating via heat transfer by steam, or it enters directly into the reaction chamber (n° 2) through conduit C (n° 22). As the water level in the reaction chamber (n°2) level decreases, preheated water ranging in temperature from 40°C-60°C thus enters. This process significantly cuts back on the energy required to reach the 90°C minimum necessary for the water to evaporate, given that 313 kJ of energy are required to heat water from 25°C to 100°C, while only 167 kJ are necessary to raise the temperature from 60°C to 100°C.

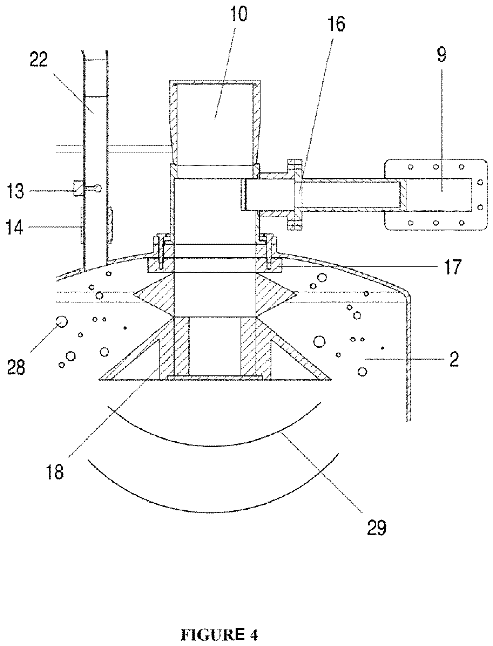

In the upper part of the reaction chamber (n° 2), the system has a circular antenna (n°10) with a diameter that is between 40% and 45% smaller than that of the condensation chamber. This antenna (n° 10), detailed in Figure 4, is equipped with a protector and diffuser (n° 18) that directs the waves through a WR-type rectangular waveguide (n° 9) with a perfectly smooth inner surface. The internal width ranges is between 30 and 50 mm, depending on the power and frequency applied; these standard values are in accordance with Maxwell's law. The preferred embodiment of the present invention uses a WR-340 waveguide (n° 9), which produces temperature increases between -40°C and 85°C. Next to the antenna, there is a group 05 [manual] impedance adapter meant to obtain maximum power transfer and minimise any loss that may occur along the wave path. The waveguides (n°9) are joined together with couplers, and the reflected waves pass through a quartz window (n°16). The different elements are coupled together (n°17). The magnetron (n° 8), the source of the electromagnetic waves, will have a minimum output power of 1 kW, and super high frequency (SHF) waves will be used to avoid interference with other frequencies. These waves make the water molecules vibrate and/or rotate to a greater extent than the particulate pollutants in the water. Due to their different dielectric charges, the particulate pollutants remain in liquid form, while the water evaporates and changes to its gaseous, or vapour, state (n° 28) and separates from the pollutants. The relational dimension between the reaction chamber (n° 2) and the antenna (n° 10) will be 1:1.18.

In the reaction chamber (n° 2), and according to the dielectric capacities described above and the to the different elements dissolved in the water, the particulate pollutants, which are transparent to the waves emitted, settle to the bottom of the chamber due to gravity. The resulting solid solute is then extracted through conduit G (n° 26).

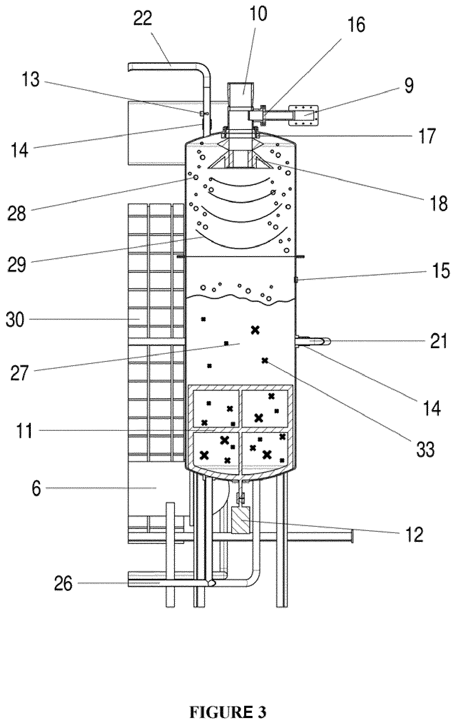

As can be seen in Figure 3, the reaction chamber (n° 2) is equipped with an agitator (n° 11) made of insulating material, preferably polytetrafluoroethylene (PTFE), driven by a stepper motor (n° 12) at a speed of one revolution per 30 seconds, so that the water temperature is homogeneous. As a safety measure, there is a second heat exchange chamber (n° 7). In the event that the wastewater heats to over 60°C, this chamber serves as storage tank for times when there is not enough demand in the reaction chamber (n° 2) to allow more water to enter. In the upper part of the reaction chamber, there is a water level probe (n° 14) that monitors the entry of preheated wastewater via the two channels described above. The vapour from the evaporation process (n° 28) concentrated in the reaction chamber (n° 2) is removed through conduit C (n° 22), located in the upper part of the chamber. Here there is a sensor (n° 13) that measures the conductivity of the water vapour in order to determine the quality of the water once it is distilled. This vapour circulates through a coil (n° 19), which condenses the vapour from the reaction chamber (n° 2) and transforms it into distilled water (n° 34).

Once condensed, the distilled water is extracted through the coil and conduit D (n° 23) towards a specific tank (n° 4). Another conduit, conduit E (n° 24), extracts residual vapour towards the exchanger (n° 7). The goal is to obtain water with a suspended solids concentration of less than 35 mg/l and a conductivity of less than 800 µS/cm, which is within the range considered suitable for irrigation water.

To control the entire process, different measurement sensors are installed throughout the system. As mentioned above, there is also a water level sensor (n°14) in the reaction chamber to monitor the water level and thus control the wastewater inflow. This sensor also determines which preheated wastewater, depending on the water temperature, enters the chamber-either that heated by the solar panels or via the heat exchanger chamber (n°7), with a preference for the wastewater has been preheated to the highest temperature. There are also temperature sensors (n° 13) fitted with carbon rod electrodes to measure the conductivity and temperature of the water located in the rest of the tanks in the system. These measurements serve to determine the degree of conductivity of the water and improve the efficiency of the system. As a safety measure, the system has a pressure sensor that measures the force (n° 15) that is generated within the reaction chamber.

## Claims

1. A system for cleaning and recycling wastewater containing pollutants with a dielectric constant lower than that of water via evaporation at a constant temperature **characterized in that** it comprises:
- Two combined wastewater preheating cycles involving solar energy, heat exchangers, and the heat obtained by the system itself from the condensation that occurs in the last phase.
- A tank, or reaction chamber, in which the preheated wastewater is exposed to electromagnetic waves emitted by a magnetron until it reaches the evaporation point. This process separates the pollutants via decantation, converting the pollutants into solid waste having less volume than the initial wastewater and resulting in usable water after condensation.

2. A system for cleaning and recycling wastewater containing pollutants with a dielectric constant lower than that of water, in accordance with claim 1, **characterized in that** it comprises:
- In the first of the combined cycles, the wastewater is heated by energy provided by solar panels to an average temperature of between 40°C and 60°C. The temperature is monitored by a thermocouple that makes it possible to regulate the flow rate of the wastewater entering the reaction chamber.
- In the other wastewater heating cycle, the wastewater enters a tank whose upper part is connected to the reaction chamber, which acts as a heat exchanger and is designed to provide preheated wastewater to the reaction chamber when the level of preheated water necessary in the reaction chamber cannot be maintained with the amount of preheated water provided by the first cycle.

3. A system for cleaning and recycling wastewater containing pollutants with a dielectric constant lower than that of water, in accordance with claim 2, **characterized in that** it comprises:
- A closed reaction chamber, or tank, coated on the inside with polytetrafluoroethylene (PTFE) and equipped on the outside with an electromagnetic wave generator, or magnetron, which is equipped with a WR-340 rectangular waveguide that transmits electromagnetic waves and has an antenna with a protector and a diffuser that directs the waves inside the reaction chamber until the evaporation temperature of the wastewater has been reached. This tank will have a circular shape and dimensions of between 40% and 45% greater than the diameter of the antenna. The reaction chamber is equipped with a level sensor and a pressure sensor, which measure the operating conditions in order to open the water supply valve or release pressure for safety reasons. The water vapour produced by evaporation leaves the reaction chamber through a coil-shaped conduit that runs from the reaction chamber to the interior of the condensation chamber, which acts as a heat exchanger.
- A closed condensation chamber, or tank, with a determined level of wastewater, into which the water vapour from the reaction chamber enters via the coil-shaped conduit through which the water vapour from the reaction chamber exits. Heat transfer between this vapour and the wastewater in the condensation tank raises the temperature of the water up to the 40°C to 60°C necessary for efficient boiling by the system in the reaction chamber. In turn, the vapour produced when the wastewater inside the condensation chamber is heated via contact with the coil (through which the vapour from the reaction chamber passes) is evacuated through a conduit that takes the vapour to the same chamber where the vapour in the coil from the reaction chamber is released, acting like a chilled steam condenser and converting the vapour into clean water.

4. A system for cleaning and recycling wastewater containing pollutants with a dielectric constant ten times lower than that of water, in accordance with claims 2 and 3, **characterized in that** it comprises:
- The reaction chamber, or tank, is equipped with an agitator made of insulating material, preferably polytetrafluoroethylene (PTFE), driven by a stepper motor at a speed of one revolution per 30 seconds, so that the water temperature is homogeneous, which helps the electromagnetic waves emitted in the wastewater to make the water molecules to vibrate and/or rotate to a greater extent than the particulate pollutants in the water. Due to their different dielectric charges, the particulate pollutants remain in liquid form, while the water evaporates and changes to its gaseous, or vapour, state and separates from the pollutants. The particulate pollutants settle to the bottom of the chamber due to gravity and are extracted through a conduit.
- A heat exchange chamber, intended for system operation safety in the event that the wastewater heats to over 60°C, in which case this chamber serves as storage tank for times when there is not enough demand in the reaction chamber to allow more water to enter.
